# EUROPEAN PATENT APPLICATION

(11) **EP 4 738 789 A1**
(43) Date of publication of application: **06.05.2026**
(21) Application number: 25210423.7
(22) Date of filing: 22.10.2025
(51) Int. Cl.: H04L 49/00, H04L 49/9057

(54) **MANAGING PACKET DATA WITH VARIABLE METADATA SIZE**

(30) Priority: 29.10.2024 US 202418929968
(71) Applicant: Avago Technologies International Sales Pte. Limited, Singapore 768923 (SG)
(72) Inventor: Gopalakrishnan, Manoj Lakshmy, Santa Clara, 95050 (US); Bansal, Ankit Sajjan Kumar, Milpitas, 95035 (US); Lau, Michael Hei-Lung, Rockville, 20850 (US)
(74) Representative: Dilg, Haeusler, Schindelmann Patentanwaltsgesellschaft mbH

(57) **Abstract**

The subject technology is directed to an apparatus for packet processing in a network. In an embodiment, the apparatus comprises a first port configured to receive a first packet. The apparatus further comprises a processor coupled to the first port, the processor configured to generate a first metadata associated with the first packet and determine a first size of the first metadata. The apparatus also includes a buffer coupled to the processor, which is configured to store the first packet and the first metadata. Based on a determination that the first size exceeds a predefined threshold, the processor is further configured to move a portion of the first packet to accommodate the larger metadata. This configuration allows for dynamic adjustment of packet data and metadata storage, optimizing the handling of packets with varying metadata requirements. There are other embodiments as well.

## Description

### FIELD OF INVENTION

The subject technology is directed to network communication systems and methods.

### BACKGROUND OF THE INVENTION

With the increasing complexity and data demands of modem network communication systems, there is a growing need for improved methods to manage and store data packets in network devices. As networks handle larger volumes of traffic, managing the allocation of resources, such as memory and processing power, becomes increasingly challenging. Applications such as cloud computing, telecommunications, and data centers rely on the efficient processing and transmission of packets to maintain system performance.

Various approaches for improving packet management in network communication have been explored, but they are often inadequate. New and improved systems and methods are desired.

### BRIEF DESCRIPTION OF THE DRAWINGS

A further understanding of the nature and advantages of particular embodiments may be realized by reference to the remaining portions of the specification and the drawings, in which like reference numerals are used to refer to similar components. In some instances, a sub-label is associated with a reference numeral to denote one of multiple similar components. When reference is made to a reference numeral without specification to an existing sub-label, it is intended to refer to all such multiple similar components.
Figure 1 is a schematic block diagram illustrating a packet processing system, in accordance with various embodiments of the subject technology.
Figure 2 is a schematic diagram illustrating the structure of data packets, in accordance with various embodiments of the subject technology.
Figures 3A-3B are schematic block diagrams illustrating the structure of a packet with metadata, in accordance with various embodiments of the subject technology.
Figure 4 is a schematic block diagram illustrating a packet processing system, in accordance with various embodiments of the subject technology.
Figure 5 is a schematic block diagram illustrating a packet processing system, in accordance with various embodiments of the subject technology.
Figures 6A-6C are schematic diagrams illustrating examples of how variable metadata is packed with packet data, in accordance with various embodiments of the subject technology.

### DETAILED DESCRIPTION OF THE INVENTION

The subject technology is directed to an apparatus for packet processing in a network. In an embodiment, the apparatus comprises a first port configured to receive a first packet. The apparatus further comprises a processor coupled to the first port, the processor configured to generate a first metadata associated with the first packet and determine a first size of the first metadata. The apparatus also includes a buffer coupled to the processor, which is configured to store the first packet and the first metadata. Based on a determination that the first size exceeds a predefined threshold, the processor is further configured to move a portion of the first packet to accommodate the larger metadata. This configuration allows for dynamic adjustment of packet data and metadata storage, optimizing the handling of packets with varying metadata requirements. There are other embodiments as well.

To facilitate packet transmission and routing, metadata is often used to provide essential information, such as routing details, security tags, and priority levels. Some approaches for managing packet transmission may involve assigning a fixed size to the metadata associated with each packet, regardless of the actual data requirements. While simple, these methods can lead to inefficient memory utilization, as smaller packets waste valuable space while larger packets may lack the necessary metadata capacity. Additionally, the fixed-size approach can lead to memory fragmentation and increased processing delays, as systems struggle to adjust to varying packet sizes and traffic conditions. Over time, these inefficiencies can result in network bottlenecks and reduced overall performance.

One general aspect includes an apparatus, which comprises a first port configured to receive a first packet, the first packet comprising a first cell and a second cell. The apparatus further comprises a processor coupled to the first port, the processor configured to generate a first metadata associated with the first packet and determine a first size of the first metadata, the first metadata comprising a first field indicating the first size of the first metadata. The apparatus further comprises a buffer coupled to the processor, the buffer configured to store the first packet and the first metadata. The processor is configured to move a portion of the first packet from the first cell to the second cell based on a determination that the first size of the first metadata exceeds a first threshold. The processor is configured to generate a third cell based on a determination that the first size of the first metadata exceeds a second threshold, and the second threshold is greater than or equal to the first threshold.

Implementations may include one or more of the following features. The apparatus further comprises a controller coupled to the first port, the controller being configured to manage a transmission of the first packet. The apparatus further comprises a second port coupled to the buffer, the second port being configured to transmit the first packet. The first metadata comprises a source address or a destination address. The first metadata comprises a priority level associated with the first packet. The processor is configured to send a first signal to the first port in response to generating the third cell. The first metadata is configured in the first cell. The first metadata is configured in the second cell. The first port is configured to receive a second packet, the processor is configured to generate a second metadata associated with the second packet and determine a second size of the second metadata, the second size is different from the first size.

According to another embodiment, the subject technology provides an apparatus, which comprises a first port configured to receive a first packet, the first packet comprising a first cell and a second cell. The apparatus further comprises a processor coupled to the first port, the processor configured to generate a first metadata associated with the first packet and determine a first size of the first metadata, the first metadata comprising a first field indicating the first size of the first metadata. The apparatus further comprises a buffer coupled to the processor, the buffer configured to store the first packet and the first metadata. The apparatus further comprises a second port coupled to the buffer, the second port being configured to transmit the first packet based on the first metadata. The processor is further configured to move a portion of the first packet from the first cell to the second cell based on a determination that the first size of the first metadata exceeds a first threshold.

Implementations may include one or more of the following features. The apparatus further comprises a controller coupled to the first port, the controller being configured to manage a transmission of the first packet. The first metadata comprises a source address or a destination address. The processor is further configured to generate a third cell based on a determination that the first size of the first metadata exceeds a second threshold, and the second threshold is greater than or equal to the first threshold. The first metadata is configured in the first cell. The first metadata comprises at least one of a source address, a destination address, a priority level, or a traffic type identifier. The first port is configured to receive a second packet, the processor is configured to generate a second metadata associated with the second packet and determine a second size of the second metadata, the second size is different from the first size.

According to yet another embodiment, the subject technology provides an apparatus, which comprises a first port configured to receive a first packet and a second packet. The apparatus further comprises a processor coupled to the first port, the processor configured to generate a first metadata associated with the first packet and a second metadata associated with the second packet. The apparatus further comprises a buffer coupled to the processor, the buffer configured to store the first packet and the second packet. The processor is further configured to determine a first size of the first metadata and a second size of the second metadata, the second size is different from the first size. The first metadata comprises a first field indicating the first size of the first metadata, and the second metadata comprises a second field indicating the second size of the second metadata. The processor is further configured to move a portion of the first packet based on a determination that the first size of the first metadata exceeds a first threshold.

Implementations may include one or more of the following features. The first packet comprises a first cell and a second cell, and the first metadata is configured in the first cell and the second cell. The apparatus further comprises a controller coupled to the first port, the controller being configured to manage a transmission of the first packet based on the first metadata. The processor is configured to generate a third cell in the first packet based on a determination that the first size of the first metadata exceeds a second threshold, the second threshold is greater than or equal to the first threshold.

The following description is presented to enable one of ordinary skill in the art to make and use the invention and to incorporate it in the context of particular applications. Various modifications, as well as a variety of uses in different applications, will be readily apparent to those skilled in the art, and the general principles defined herein may be applied to a wide range of embodiments. Thus, the subject technology is not intended to be limited to the embodiments presented but is to be accorded the widest scope consistent with the principles and novel features disclosed herein.

In the following detailed description, numerous specific details are set forth in order to provide a more thorough understanding of the subject technology. However, it will be apparent to one skilled in the art that the subject technology may be practiced without necessarily being limited to these specific details. In other instances, well-known structures and devices are shown in block diagram form, rather than in detail, in order to avoid obscuring the subject technology.

The reader's attention is directed to all papers and documents which are filed concurrently with this specification and which are open to public inspection with this specification, and the contents of all such papers and documents are incorporated herein by reference. All the features disclosed in this specification, (including any accompanying claims, abstract, and drawings) may be replaced by alternative features serving the same, equivalent, or similar purpose, unless expressly stated otherwise. Thus, unless expressly stated otherwise, each feature disclosed is one example only of a generic series of equivalent or similar features.

Furthermore, any element in a claim that does not explicitly state "means for" performing a specified function, or "step for" performing a specific function, is not to be interpreted as a "means" or "step" clause as specified in 35 U.S.C. Section 112, Paragraph 6. In particular, the use of "step of" or "act of" in the Claims herein is not intended to invoke the provisions of 35 U.S.C. 112, Paragraph 6.

When an element is referred to herein as being "connected" or "coupled" to another element, it is to be understood that the elements can be directly connected to the other element, or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

Moreover, the terms left, right, front, back, top, bottom, forward, reverse, clockwise and counterclockwise are used for purposes of explanation only and are not limited to any fixed direction or orientation. Rather, they are used merely to indicate relative locations and/or directions between various parts of an object and/or components.

Furthermore, the methods and processes described herein may be described in a particular order for ease of description. However, it should be understood that, unless the context dictates otherwise, intervening processes may take place before and/or after any portion of the described process, and further various procedures may be reordered, added, and/or omitted in accordance with various embodiments.

Unless otherwise indicated, all numbers used herein to express quantities, dimensions, and so forth should be understood as being modified in all instances by the term "about." In this application, the use of the singular includes the plural unless specifically stated otherwise, and use of the terms "and" and "or" means "and/or" unless otherwise indicated. Moreover, the use of the terms "including" and "having," as well as other forms, such as "includes," "included," "has," "have," and "had," should be considered non-exclusive. Also, terms such as "element" or "component" encompass both elements and components comprising one unit and elements and components that comprise more than one unit, unless specifically stated otherwise.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C," or alternatively, "at least one of A, at least one of B, and at least one of C," it is expressly described as such.

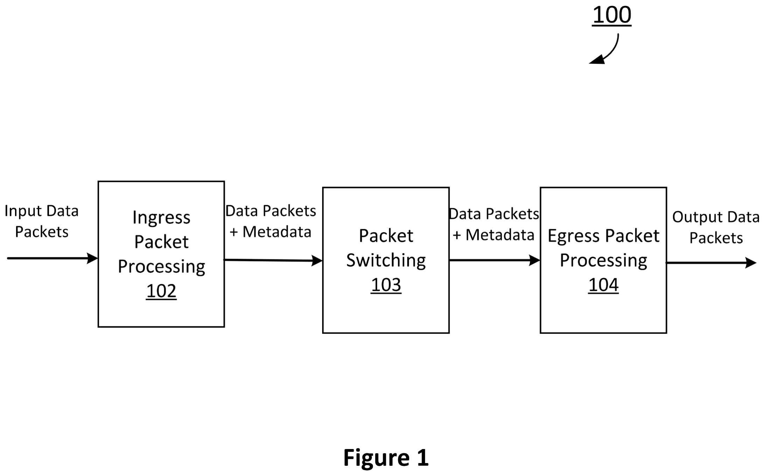

Figure 1 is a schematic block diagram illustrating a packet processing system 100, in accordance with various embodiments of the subject technology. This diagram merely provides an example, which should not unduly limit the scope of the claims. One of ordinary skill in the art would recognize many variations, alternatives, and modifications.

System 100 may be part of various types of network devices, such as switches, routers, gateways, or firewalls, designed to handle packet processing in a network infrastructure. It could also be integrated into network interface controllers (NICs), load balancers, or edge devices that manage data flow between different segments of a network. Depending on the application, system 100 may be applied to a variety of networking protocols including, without limitation, Ethernet, Internet protocol (IP), multiprotocol label switching (MPLS), transmission control protocol/Internet protocol (TCP/IP), user datagram protocol (UDP), Wi-Fi, cellular network protocols (e.g., 4G, 5G), and/or the like.

In some embodiments, system 100 is configured to receive input data packets. For instance, the term "packet" or "data packet" may refer to a unit of data transmitted across a network. The input data packets may originate from a variety of sources, such as client devices, remote servers, edge devices in cloud computing environments, Internet of Things (IoT) networks, telecommunications systems, and/or the like. The input data packets may contain various types of information including, without limitation, user data, application data, multimedia streams, sensor data, and/or the like.

In various implementations, the input data packets may pass through ingress packet processing stage 102 where metadata is generated and applied to the packet. The term "metadata" may refer to additional information associated with a packet that aids in its processing, routing, or handling across a network. Metadata may include, without limitation, routing information (e.g., source and destination addresses), priority levels, traffic type identifiers, error-checking codes, security information, and/or the like. The metadata plays an important role in helping system 100 apply the correct protocols and policies, ensuring the packet is handled in accordance with the network's requirements.

Once metadata is generated in ingress packet processing stage 102, the packet along with its metadata may be forwarded to packet switching stage 103, where the metadata is used to make decisions about how the packet should be routed through the network. This stage ensures that the packet is directed to the appropriate destination while adhering to network protocols, security requirements, and prioritization rules.

After the packet switching decision is made, the packet proceeds to egress packet processing stage 104, where it is prepared for transmission out of the system to its next destination. This may involve reformatting the packet to match the requirements of the outgoing interface or applying additional security or quality of service (QoS) adjustments based on real-time network conditions.

In various implementations, the size of the metadata may vary depending on the complexity of the packet's processing requirements. For example, a packet traveling through multiple network nodes or requiring enhanced security may generate a larger amount of metadata, whereas a simple packet with minimal routing or security demands may require only a small amount of metadata.

As networks and their associated features grow in complexity, the size of metadata required for each packet processing event also increases. The increasing size of metadata creates overhead on the system's internal bandwidth, as both the datapaths and memory storage must allocate more resources to transfer and store the larger metadata, resulting in increased clock frequency requirements. The higher clock frequencies directly translate to higher power consumption, as the system must operate at faster rates to maintain line-rate performance, leading to thermal management challenges and reduced overall efficiency.

In some cases, the system may attempt to compensate by increasing the width of the datapaths and memory storage to accommodate the additional bytes of metadata. However, this comes at a substantial cost in terms of device area (e.g., memory and wiring) and power consumption, as larger memory buses and wider datapaths consume more energy and take up more physical space.

Some approaches address this problem by establishing a fixed metadata size to account for the maximum possible metadata that could be required for any given packet. However, these approaches may lead to inefficient use of memory, as packets that do not require the full metadata allocation waste valuable storage space. Additionally, the need to maintain line-rate switching performance with fixed metadata sizes increases the overall power consumption, as the system must operate at higher frequencies to accommodate the fixed overhead, further complicating the system's power management and thermal performance. Consequently, the challenge of handling packets with varying metadata sizes remains a significant issue in ensuring efficient packet processing in modern network environments.

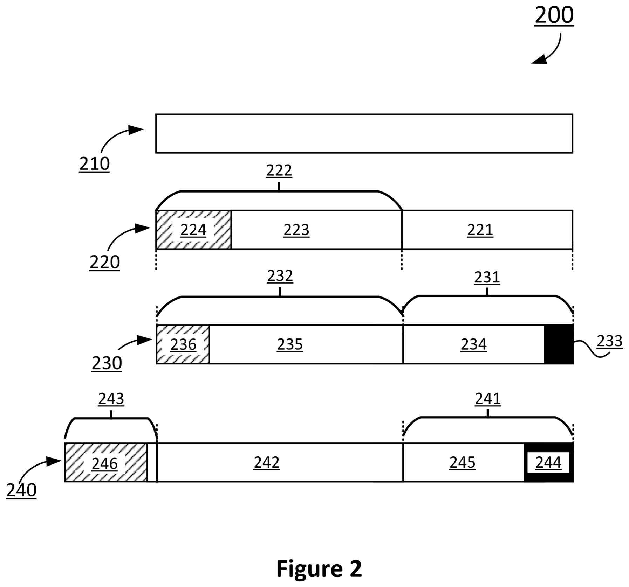

Figure 2 is a schematic diagram illustrating the structure of data packets 200, in accordance with various embodiments of the subject technology. This diagram merely provides an example, which should not unduly limit the scope of the claims. One of ordinary skill in the art would recognize many variations, alternatives, and modifications. As shown, packet 210 represents a data packet in its entirety before any processing. It serves as the base structure of a packet, containing raw data that will be received and processed by a network device (e.g., system 100 of Figure 1).

Packet 220 illustrates a processed packet divided into cells. For instance, packet 220 may include cells 221 and 222. For example, the term "cell" may refer to a segment of data within a packet. A cell is used to segment the packet into manageable portions for processing, routing, or storage within a network device. A cell may include portions of the packet data or additional control information (e.g., metadata). In some examples, cell 221 may represent the start of the packet (SOP), which may contain the initial segment of the packet data. The SOP cell is the first in the sequence of cells that make up the packet and may be used to signify the beginning of the packet during processing and transmission. In some cases, cell 222 may represent the end of the packet (EOP), which may contain the final portion of the packet data (e.g., portion 223). In various examples, packet 220 may further include unused portion 224, which represents extra space allocated within cell 221 that is not occupied by data.

As an example, packet 230 shows a scenario where the packet is processed with standard metadata. For instance, packet 230 includes SOP cell 231 and EOP cell 232. Packet 230 may further include metadata 233, which may be stored in SOP cell 231. The actual packet data may begin at portion 234, following metadata 233, and continue into the subsequent cell 232 (e.g., portion 235). In some cases, packet 230 may require only a standard or small amount of metadata (e.g., 16 bytes), which does not fully utilize the available space in the cell, leaving unused portion 236. Examples of packet flows that use standard metadata size may include unicast traffic such as IPv4 or IPv6 unicast packets, as well as tunnel protocols such as IP-in-IP, VXLAN, and generic routing encapsulation (GRE).

In various implementations, packet 240 illustrates a packet that requires larger metadata (e.g., due to more complex processing or routing requirements). For example, packet 240 includes cells 241, 242, and 243. Packet 240 may further include metadata 244, which may be stored in cell 241. The actual packet data may begin at portion 245 within cell 241 and continue into subsequent cell 242. In some embodiments, the size of metadata 244 is larger than standard metadata, occupying a substantial part of cell 241. Accordingly, only a small portion of the actual packet data fits in cell 241, with the remaining data being shifted into the following cells. Packet flows that use larger metadata sizes may include multicast traffic or unicast traffic with instrumentation. For example, multicast traffic may include L2 multicast, IPv4, or IPv6 multicast, and instrumentation traffic may involve higher-level processes that monitor the network's performance, reliability, and security.

In various embodiments, if the size of metadata 244 exceeds the space available within packet 240, a new cell 243 may be generated to accommodate the excess data. This allows the system to efficiently handle the increased metadata size while maintaining packet integrity. The unused portion 246 in cell 243 represents extra space that remains unoccupied when the packet size does not fully utilize the available cell capacity. Other packet flows that may require even larger metadata sizes may include mirror flows or copy-to-CPU flows. These flows involve generating copies of packets being switched to an egress port, with the copy directed to either a "mirror-to" port or the CPU port. These copies are often generated for handling unknown protocol types or errored packets and are beneficial for network debugging and diagnostics.

As explained above, the amount of metadata required for each packet is not fixed but varies based on the complexity and specific processing needs of the packet. The examples in Figure 2 demonstrate how the system dynamically adjusts the metadata size for each packet based on its individual processing needs. By efficiently allocating packet data across multiple cells, the system accommodates different metadata sizes, ensuring that both simple and complex packets are processed effectively, without introducing unnecessary memory or bandwidth overhead.

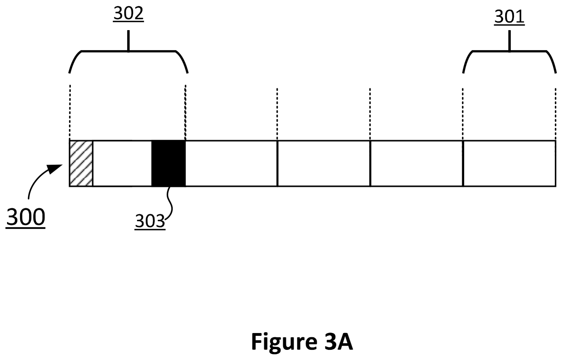

Figures 3A-3B are schematic block diagrams illustrating the structure of a packet with metadata, in accordance with various embodiments of the subject technology. These diagrams merely provide an example, which should not unduly limit the scope of the claims. One of ordinary skill in the art would recognize many variations, alternatives, and modifications.

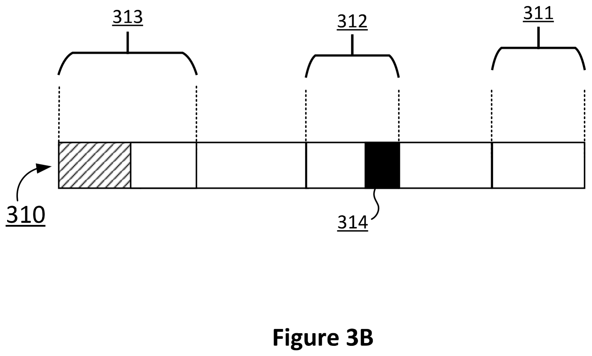

Depending on the implementation, metadata may be configured at varying locations within a cell. For instance, as shown in Figure 3A, packet 300 may include a plurality of cells, where cell 301 represents the SOP and cell 302 represents the EOP. Packet 300 may include metadata 303, which may be located at the end of the packet (e.g., within EOP cell 302). In some examples, as shown in Figure 3B, packet 310 may include a plurality of cells, such as SOP cell 311, middle-of-packet (MOP) cell 312, and EOP cell 313. Packet 310 may include metadata 314, which may be configured in the middle portion of the packet (e.g., within middle cell 312). The flexibility of configuring metadata at various locations within a packet ensures that the system can handle varying metadata sizes while efficiently utilizing available memory. By allowing metadata to be placed in different cells, the system can optimize resource allocation, minimize memory overhead, and ensure smooth packet processing regardless of the packet's complexity.

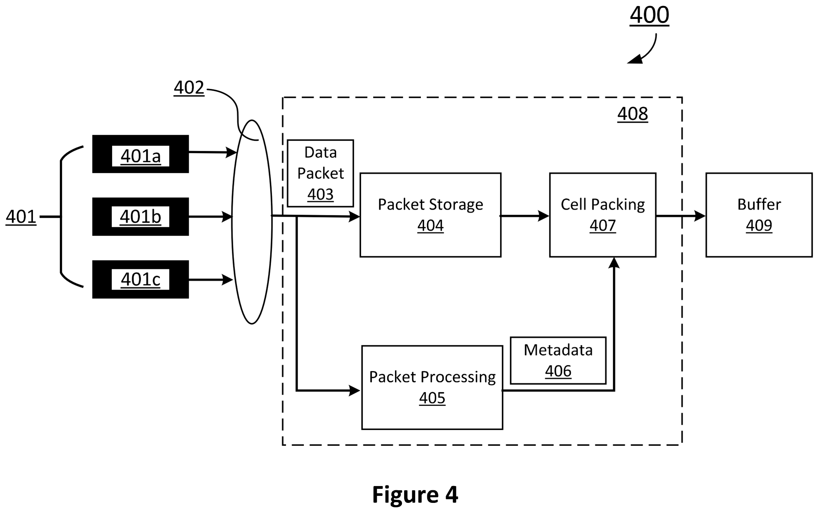

Figure 4 is a schematic block diagram illustrating a packet processing system 400, in accordance with various embodiments of the subject technology. This diagram merely provides an example, which should not unduly limit the scope of the claims. One of ordinary skill in the art would recognize many variations, alternatives, and modifications.

System 400 may be part of various types of network devices, such as switches, routers, gateways, or firewalls, designed to handle packet processing in a network infrastructure. It could also be integrated into network interface controllers (NICs), load balancers, or edge devices that manage data flow between different segments of a network. Depending on the application, system 400 may be applied to a variety of networking protocols including, without limitation, Ethernet, Internet protocol (IP), multiprotocol label switching (MPLS), transmission control protocol/Internet protocol (TCP/IP), user datagram protocol (UDP), Wi-Fi, cellular network protocols (e.g., 4G, 5G), and/or the like. Additionally, system 400 may be implemented in a variety of switch devices such as enterprise networking top-of-rack (TOR) switches or pizza box systems, as well as in data center CLOS topology networks where multiple levels of hierarchical switches are used. It may also be deployed in artificial intelligence (AI) systems, where switching chips interconnect processing units and their associated NIC devices to facilitate high-bandwidth communication for AI model operations.

In various implementations, system 400 includes one or more ports 401, which are configured to receive incoming data packets. As an example, one or more ports 401 may include first port 401a, second port 402b, and third port 401c. For instance, the term "port" may refer to a physical or logical interface on a network device that is used for receiving or transmitting data packets. Examples of ports may include Ethernet ports, fiber optic interfaces, network interfaces, and/or the like. In some examples, first port 401a is configured to receive a first packet, which may include a first cell and a second cell. In some cases, first port 401a may also be configured to receive a second packet.

In some embodiments, system 400 further includes scheduler 402 coupled to one or more ports 401 (e.g., first port 401a). Scheduler 402 may be configured to manage the order in which packets are processed and transmitted across the system. For instance, the term "scheduler" may refer to a hardware or software component responsible for organizing packet flow within a network device. Scheduler 402 determines the transmission order of packets based on various factors, such as packet priority, bandwidth allocation, queue status, or QoS policies. In some examples, scheduler 402 is configured to monitor the incoming data traffic from one or more ports 401 and decide the sequence in which packets are passed to subsequent processing stages. For instance, scheduler 402 may be configured to manage a transmission of the first packet and/or the second packet.

In some examples, system 400 further includes processor 408 coupled to scheduler 402 and/or one or more ports 401. For instance, the term "processor" may refer to any hardware or software component configured to analyze, modify, or manage data packets. Examples of processors may include, without limitation, central processing units (CPUs), digital signal processors (DSPs), field-programmable gate arrays (FPGAs), network processors, application-specific integrated circuits (ASICs), and/or the like.

In various implementations, processor 408 is configured to receive data packet 403 from one or more ports 401 and generates associated metadata 406 for each packet. For instance, the received data packets may be initially stored in storage 404, which is configured to temporarily hold the packet data for further processing. Storage 404 may include, without limitation, random-access memory (RAM), dynamic RAM (DRAM), static RAM (SRAM), flash memory, solid-state drive (SSD), pseudostatic random-access memory (PSRAM), and/or the like.

In some embodiments, processor 408 includes packet processing unit 405, which may be configured to analyze data packet 403 (e.g., the first packet) and generate associated metadata 406 (e.g., the first metadata). For instance, packet processing unit 405 may determine relevant packet-specific information, such as routing paths, security credentials, or priority levels, which are necessary for generating metadata. During this time, the packet data may be held in storage 404 while the metadata is being generated. The generated metadata 406 provides essential information for the handling and routing of packets across the network. For instance, metadata 406 may include, without limitation, routing information (e.g., source and destination addresses), priority levels, traffic type identifiers, error-checking codes, security information, and/or the like.

After the packet processing and metadata generation are complete, cell packing unit 407 retrieves the packet data from storage 404 and combines it with the generated metadata 406. In various examples, cell packing unit 407 may divide the packet and metadata into units (or cells) that are stored in buffer 409 for transmission. In various examples, buffer 409 is configured to temporarily hold data packets until they are ready to be transmitted across the network. Buffer 409 may include, without limitation, a shared memory buffer, a first-in-first-out (FIFO) buffer, and/or the like. Buffer 409 helps regulate the packet flow between different stages of processing and can absorb delays, especially when network congestion or temporary bottlenecks occur.

In some examples, processor 408 is configured to generate a first metadata associated with the first packet and determine a first size of the first metadata. For example, the size of metadata may refer to the amount of information necessary to describe and process a packet. Depending on the implementation, the size of the metadata may vary based on the complexity and requirements of the packet. For instance, packets requiring minimal processing or simple routing might have smaller metadata, while packets that require more advanced handling-such as those that require security processing or QoS guarantees-might need larger metadata.

In some embodiments, the first metadata may include a first field indicating the first size of the first metadata. The first field may be used to inform the downstream processing stages (e.g., the egress side) about the size of the metadata accompanying the packet. By using the first field, the egress processing pipeline is made aware of the metadata size in advance, allowing for efficient handling and proper resource allocation during the egress transmission process.

In various embodiments, processor 408 dynamically adjusts the metadata size based on the needs of each packet. For instance, the system may define a standard metadata size (e.g., 16 bytes), which is expected to be sufficient for the majority of packet types requiring basic processing. If the metadata size is less than or equal to the predefined standard size, then the packet can be processed and stored in the allocated space without any modifications. In this scenario, the space already allocated for metadata is sufficient, and no additional resources are required. An example of a packet with standard metadata is packet 230 of Figure 2. As shown, packet 230 includes metadata 233 that fits entirely within the available space allocated for metadata, leaving the majority of the packet's data intact and minimizing memory usage.

For packets requiring more complex processing (e.g., encryption, multi-hop routing, or priority management), the size of the metadata may exceed the standard size. In such cases, the space allocated for metadata may be increased to accommodate the larger size before the packet can be stored. An example of a packet with larger metadata is packet 240 of Figure 2. As shown, when metadata 244 exceeds the standard size, processor 408 may move part of the packet data into subsequent cells, ensuring that there is enough space to store the expanded metadata within the packet.

In some cases, the metadata may require the creation of new cells to accommodate the larger size, as shown in the additional cell (e.g., cell 243) generated for packet 240. It is to be appreciated that the increase in metadata space is only applied to specific packets where the need for larger metadata is determined, thus minimizing the overall overhead and preventing unnecessary memory usage. In various implementations, when a new cell is generated, processor 408 may generate and send a first signal to the sending module (e.g., ports 401 or scheduler 402). The first signal informs the sending module that a new cell has been generated due to the larger metadata size and is used to throttle the sending of additional cells as necessary. Additionally, a compensation mechanism may be applied to the specific port that generated the new cell, ensuring fair bandwidth distribution across all ports.

By adjusting the metadata size only when necessary, system 400 avoids unnecessary memory usage and ensures efficient data storage without risking buffer overflow. Additionally, system 400 maintains a balanced traffic flow by ensuring that newly generated cells for larger metadata are transmitted without disrupting bandwidth allocation or fairness across ports. This dynamic adjustment helps optimize both power consumption and performance while ensuring that network resources are shared fairly among all packets and ports.

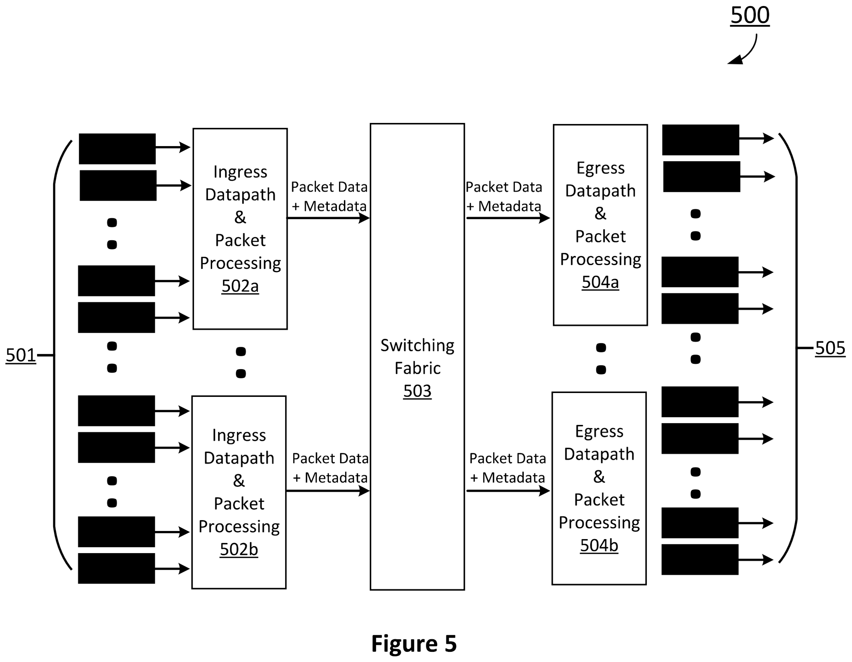

Figure 5 is a schematic block diagram illustrating a packet processing system 500, in accordance with various embodiments of the subject technology. This diagram merely provides an example, which should not unduly limit the scope of the claims. One of ordinary skill in the art would recognize many variations, alternatives, and modifications.

In various implementations, system 500 includes one or more ingress datapaths and egress datapaths connected through a central switching fabric. It may be deployed in a variety of network devices (e.g., switches or routers), and can also be used in data centers or cloud computing environments, as well as artificial intelligence and machine learning systems where high-performance packet switching is beneficial. System 500 handles packets as they arrive from one or more ingress ports and routes them through the appropriate egress ports based on metadata generated for each packet.

As shown, system 500 includes one or more ingress ports 501, which may be coupled to one or more ingress processing units (e.g., 502a and 502b). In some examples, ingress processing units 502a and 502b may be configured to process incoming data packets and generate associated metadata. These packets, along with their associated metadata, may then be forwarded to switching fabric 503, which is configured to direct the packet to the appropriate egress path based on the routing and processing information provided in the metadata. This ensures that packets are routed efficiently while adhering to network protocols and prioritization rules.

After passing through switching fabric 503, the packets and their metadata may arrive at one or more egress processing units (e.g., 504a and 504b). The egress processing units 504a and 504b may be configured to prepare the packets for transmission out of system 500 via one or more egress ports 505. This may involve additional formatting, such as adjusting packet headers or applying security features before the packet exits the system.

Depending on the implementation, system 500 may be designed to accommodate variable metadata sizes. The ability to adjust metadata size dynamically allows system 500 to handle a wide range of packet types and processing scenarios, optimizing memory usage and ensuring efficient power consumption while maintaining high throughput and low latency.

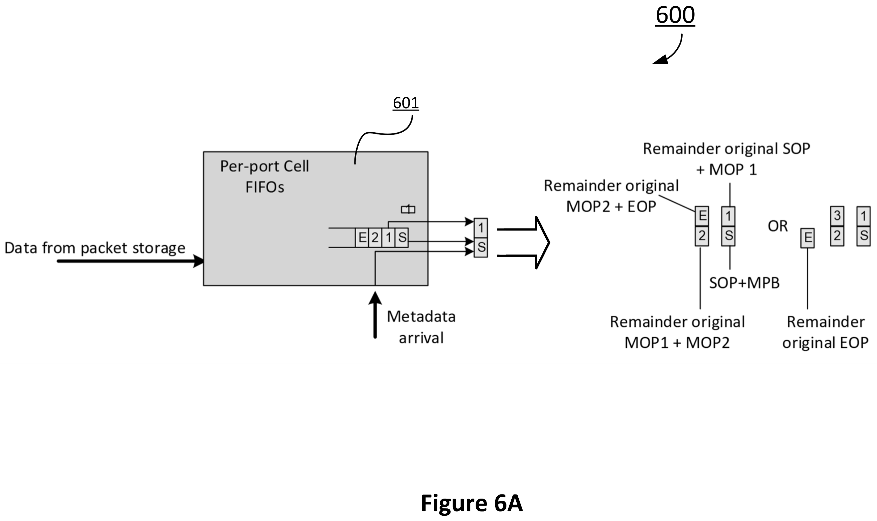

Figures 6A-6C are schematic diagrams illustrating examples 600 of how variable metadata is packed with packet data, in accordance with various embodiments of the subject technology. These diagrams merely provide an example, which should not unduly limit the scope of the claims. One of ordinary skill in the art would recognize many variations, alternatives, and modifications.

As shown in Figure 6A, a data packet from storage may be processed in processing unit 601 (e.g., cell packing unit 407 of Figure 4), where the metadata arrives during the cell packing process. Processing unit 601 may include a first-in-first-out (FIFO) structure to temporarily store and manage the data packet. The FIFO ensures that packet cells are processed in the same order they are received, which helps maintain the integrity of the data flow and the order of packet transmission.

Metadata arrival during the packing process adds additional information to the packet, such as routing paths, security credentials, and/or other processing instructions. The incoming data packet may include one or more cells, such as a start-of-packet (SOP) cell (e.g., "S"), an end-of-packet (EOP) cell (e.g., "E"), and one or more middle-of-packet (MOP) cells (e.g., "1" and "2"). Metadata (e.g., MPB) may be configured at varying locations within the packet. For instance, it can be inserted into the SOP cell or, if more metadata space is required, the system may generate a new cell (e.g., cell "3") to accommodate the larger metadata. The packet data is then shifted accordingly, with parts of the original data being distributed across multiple cells (e.g., SOP, MOP1, MOP2) to ensure that the metadata is properly stored without causing overflow or data loss.

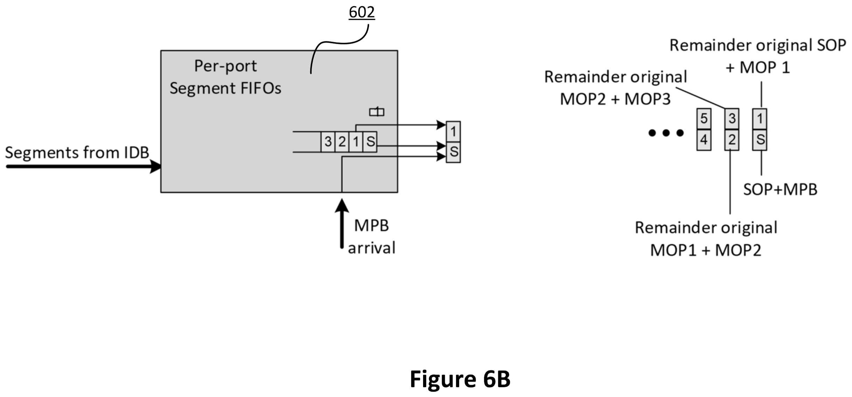

As shown in Figure 6B, a data packet from storage may be processed in processing unit 602, which may include a FIFO structure to maintain the order of packet cells. In various examples, the packet may include one or more cells (e.g., "S," "1," "2," "3"). For instance, metadata may be inserted into the SOP cell (e.g., cell "S"). In some examples, the insertion of metadata may require moving portions of the packet data into existing cells. In some cases, additional cells (e.g., cells "4" and "5") may be generated to ensure that the remainder of the original packet data, as well as the expanded metadata, can be properly packed and stored.

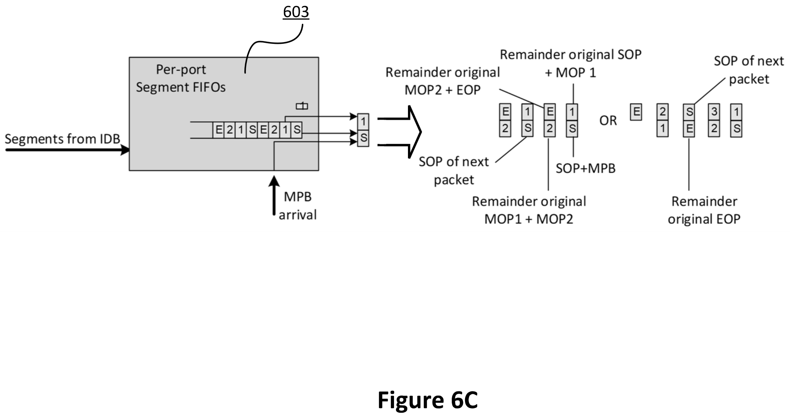

As shown in Figure 6C, a data packet from storage may be processed in processing unit 603, which may include a FIFO structure to maintain the order of packet cells. In some examples, the data packet may include one or more segments, each of which may include one or more cells. For instance, the data packet may include two repeating segments (e.g., sequence "S12E"). The arrival of metadata during the cell packing process causes the packet to be repackaged for transmission. In some examples, metadata may be inserted into the SOP cell, and the packet may be split into smaller segments with the remainder of the original SOP and MOP cells following.

In various examples, the expansion of the packet due to larger metadata may result in the splitting of the original EOP cell into two parts (e.g., new cell "3" and "E"). This ensures the packet can accommodate the expanded metadata without losing data integrity. The redistribution of data across these expanded cells can also impact the subsequent packet, as shown in the diagram. For instance, when the EOP cell is split and new cells are created, the following packet may be delayed, since the expansion of the current packet takes more time to process and transmit. In some cases, this adjustment necessitates feedback to the port or scheduler to ensure that the expanded packet can be transmitted without disrupting the overall packet flow, as the extra time required for transmission must be accounted for.

While the above is a full description of the specific embodiments, various modifications, alternative constructions and equivalents may be used. Therefore, the above description and illustrations should not be taken as limiting the scope of the subject technology which is defined by the appended claims.

## Claims

1. An apparatus comprising:
a first port configured to receive a first packet, the first packet comprising a first cell and a second cell;
a processor coupled to the first port, the processor configured to generate a first metadata associated with the first packet and determine a first size of the first metadata, the first metadata comprising a first field indicating the first size of the first metadata; and
a buffer coupled to the processor, the buffer configured to store the first packet and the first metadata;
wherein the processor is configured to move a portion of the first packet from the first cell to the second cell based on a determination that the first size of the first metadata exceeds a first threshold; and
wherein the processor is configured to generate a third cell based on a determination that the first size of the first metadata exceeds a second threshold, and the second threshold is greater than or equal to the first threshold.

2. The apparatus of claim 1, further comprising
a controller coupled to the first port, the controller being configured to manage a transmission of the first packet.

3. The apparatus of claim 1 or 2, further comprising
a second port coupled to the buffer, the second port being configured to transmit the first packet.

4. The apparatus of any one of the claims 1 to 3, wherein
the first metadata comprises a source address or a destination address.

5. The apparatus of any one of the claims 1 to 4, the
first metadata comprises a priority level associated with the first packet;
wherein in particular
the processor is configured to send a first signal to the first port in response to generating the third cell.

6. The apparatus of any one of the claims 1 to 5, wherein
the first metadata is configured in the first cell.

7. The apparatus of any one of the claims 1 to 6, wherein
the first metadata is configured in the second cell.

8. The apparatus of any one of the claims 1 to 7, wherein
the first port is configured to receive a second packet, the processor is configured to generate a second metadata associated with the second packet and determine a second size of the second metadata, the second size is different from the first size.

9. An apparatus comprising:
a first port configured to receive a first packet, the first packet comprising a first cell and a second cell;
a processor coupled to the first port, the processor configured to generate a first metadata associated with the first packet and determine a first size of the first metadata, the first metadata comprising a first field indicating the first size of the first metadata;
a buffer coupled to the processor, the buffer configured to store the first packet and the first metadata; and
a second port coupled to the buffer, the second port being configured to transmit the first packet based on the first metadata;
wherein the processor is further configured to move a portion of the first packet from the first cell to the second cell based on a determination that the first size of the first metadata exceeds a first threshold.

10. The apparatus of claim 9, further comprising at least one of the following features:
(A) the apparatus further comprises a controller coupled to the first port, the controller being configured to manage a transmission of the first packet;
(B) the first metadata is configured in the second cell.
(C) the first metadata is configured in the first cell; and
(D) the first port is configured to receive a second packet, the processor is configured to generate a second metadata associated with the second packet and determine a second size of the second metadata, the second size is different from the first size.

11. The apparatus of claim 9 or 10, wherein
the processor is further configured to generate a third cell based on a determination that the first size of the first metadata exceeds a second threshold, and the second threshold is greater than or equal to the first threshold.

12. The apparatus of any one of the claims 9 to 11, wherein
the first metadata comprises at least one of a source address, a destination address, a priority level, or a traffic type identifier.

13. An apparatus comprising:
a first port configured to receive a first packet and a second packet;
a processor coupled to the first port, the processor configured to generate a first metadata associated with the first packet and a second metadata associated with the second packet; and
a buffer coupled to the processor, the buffer configured to store the first packet and the second packet;
wherein the processor is further configured to determine a first size of the first metadata and a second size of the second metadata, the second size is different from the first size;
wherein the first metadata comprises a first field indicating the first size of the first metadata, and the second metadata comprises a second field indicating the second size of the second metadata; and
wherein the processor is further configured to move a portion of the first packet based on a determination that the first size of the first metadata exceeds a first threshold.

14. The apparatus of claim 13, wherein
the first packet comprises a first cell and a second cell, and the first metadata is configured in the first cell and the second cell.

15. The apparatus of claim 13 or 14, further comprising at least one of the following features:
(A) the apparatus further comprises a controller coupled to the first port, the controller being configured to manage a transmission of the first packet based on the first metadata;
and
(B) the processor is configured to generate a third cell in the first packet based on a determination that the first size of the first metadata exceeds a second threshold, the second threshold is greater than or equal to the first threshold.
